(19) Europäisches Patentamt / European Patent Office / Office européen des brevets

(11) **EP 4 481 391 A1**

(12) **EUROPEAN PATENT APPLICATION**
published in accordance with Art. 153(4) EPC

(43) Date of publication:
**25.12.2024 Bulletin 2024/52**

(21) Application number: **22926087.2**

(22) Date of filing: **14.12.2022**

(51) International Patent Classification (IPC):
**G01N 35/00** (2006.01)    **G01N 35/08** (2006.01)

(52) Cooperative Patent Classification (CPC):
**G01N 35/00; G01N 35/08**

(86) International application number:
**PCT/JP2022/046035**

(87) International publication number:
**WO 2023/153073 (17.08.2023 Gazette 2023/33)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **14.02.2022   JP 2022020783**

(71) Applicants:
• **HITACHI HIGH-TECH CORPORATION**
  **Tokyo 105-6409 (JP)**
• **F. Hoffmann-La Roche AG**
  **4070 Basel (CH)**
  Designated Contracting States:
  **AL AT BE BG CH CY CZ DK EE ES FI FR GB GR HR HU IE IS IT LI LT LU LV MC ME MK MT NL NO PL PT RO RS SE SI SK SM TR**
• **Roche Diagnostics GmbH**
  **68305 Mannheim (DE)**
  Designated Contracting States:
  **DE**

(72) Inventors:
• **SASAKI Shunsuke**
  **Tokyo 105-6409 (JP)**
• **IMAI Kenta**
  **Tokyo 105-6409 (JP)**
• **HADORN Maik Roger**
  **6343 Rotkreuz ZG (CH)**
• **KUEHNL Michael**
  **82377 Penzberg (DE)**
• **PUKAS Darius**
  **02-672 Warszawa (PL)**
• **BRZEZINSKI Mikolaj**
  **02-672 Warszawa (PL)**
• **MARCHEWA Janusz**
  **68305 Mannheim (DE)**

(74) Representative: **MERH-IP Matias Erny Reichl Hoffmann**
**Patentanwälte PartG mbB**
**Paul-Heyse-Straße 29**
**80336 München (DE)**

(54) **COMPONENT ABNORMALITY DETECTING SYSTEM, AUTOMATED ANALYZING DEVICE, AND COMPONENT ABNORMALITY DETECTING METHOD**

(57)    Such a parts anomaly detection system is provided as being able to detect the anomaly of the parts of the liquid transport system of the automatic analyzer without delay.

The parts anomaly detection system to detect the anomaly of the parts of the liquid transport system (22) which absorbs and discharges liquid with respect to a sensor (21) for sample inspection of an automatic analyzer (1) comprises: storage devices (31, 41) to store data of electric signals outputted by the sensor and processing devices (32,42) to process the data recorded in the storage devices, in which the processing devices detect the anomaly of the parts of the liquid transport system based on the electric signals.

EP 4 481 391 A1

# FIG. 11

```
                    ┌──────────────┐
                    │    START     │
                    └──────┬───────┘
                           ▼
            ┌──────────────────────────────┐
            │   ACQUIRE MEASURED DATA       │
            │     AND SENSOR DATA           │
            └──────────────┬───────────────┘
                           ▼
                 ╱──────────────────╲        S11
                ╱   PRESENCE OF       ╲  NO
               ⟨  ALARM FOR MEASUREMENT ⟩──────▶
                ╲      RESULT         ╱
                 ╲──────────────────╱
                        │ YES
                        ▼                   S12
            ┌──────────────────────────────┐
            │     EXTRACT SENSOR DATA       │
            └──────────────┬───────────────┘
                           ▼
                 ╱──────────────────╲        S13
           NO   ╱   NUMBER OF         ╲
         ◀─────⟨  ALARMS OVER LATEST   ⟩
               ╲ SET PERIOD HIGHER THAN╱
                ╲    SET NUMBER       ╱
                 ╲──────────────────╱
                        │ YES
                        ▼                   S14
            ┌──────────────────────────────┐
            │ STATISTICALLY PROCESS ENTIRE  │
            │ DATA OVER LATEST SET PERIOD   │
            └──────────────┬───────────────┘
                           ▼                S15
            ┌──────────────────────────────┐
            │      COMPUTE CV VALUE         │
            └──────────────┬───────────────┘
                           ▼
                 ╱──────────────────╲        S16
                ╱    CV VALUE         ╲  NO
               ⟨  HIGHER THAN SET       ⟩──────▶
                ╲      VALUE          ╱
                 ╲──────────────────╱
                        │ YES                S17
                        ▼
            ┌──────────────────────────────┐
            │     DETERMINE MALFUNCTION     │
            └──────────────┬───────────────┘
                           ▼
                    ┌──────────────┐
                    │     END      │
                    └──────────────┘
```

**Description**

Technical Field

The present invention relates to a parts anomaly detection system, an automatic analyzer, and a parts anomaly detection method.

Background Art

An automatic analyzer is generally configured with more than 1000 kinds of parts. When some parts fail, it is necessary to urgently repair or replace the failure parts in order to suppress the occurrence of downtime of the automatic analyzer.

Patent Document 1 discloses a technique for generating an algorithm for failure prediction from data related to the occurrence of a failure of an automatic analyzer, and predicting, by using the algorithm, a failure such as the breakage of parts on the basis of at least either data of calibration or data of quality management of the automatic analyzer.

Prior Art Document

Patent Document

Patent Document 1: JP-2019-536049-A

Summary of the Invention

Problem to be Solved by the Invention

Some automatic analyzers are provided with, for example, a liquid transport system that supplies or discharges liquid such as a sample, a reagent, or cleansing liquid with respect to a sensor (a flow cell or the like) for measuring a sample. The liquid transport system is configured with parts such as a passage through which the liquid is allowed to pass, plural valves for opening and closing the passage, and a syringe for sucking and discharging the liquid. These parts of the liquid transport system are usually parts that are periodically replaced, and a mechanism for positively detecting the failure of the parts of the liquid transport system is not generally mounted on the automatic analyzer.

An object of the present invention is to provide a parts anomaly detection system capable of detecting anomaly of parts of a liquid transport system, an automatic analyzer equipped with the parts anomaly detection system, and a parts anomaly detection method.

Means for Solving the Problem

In order to solve the above object, the present invention provides a parts anomaly detection system to detect anomaly of parts of a liquid transport system which absorbs and discharges liquid with respect to a sensor for sample inspection of an automatic analyzer, in which the system includes storage devices to store data of electric signals outputted by the sensor and processing devices to process the data recorded in the storage devices, and the processing devices detect the anomaly of the parts of the liquid transport system based on the electric signals.

Advantages of the Invention

According to the present invention, it is possible to detect anomaly of parts of a liquid transport system of an automatic analyzer.

Brief Description of Drawings

Fig. 1 is a plan view exemplarily illustrating one structural arrangement of an automatic analyzer, to which a diagnosis system according to the first embodiment of the present invention is applied.
Fig. 2 is an exemplary view of the liquid transport system with which the automatic analyzer illustrated in Fig. 1 is provided.
Fig. 3 is an exemplary view of the sensor used for measuring a sample at the automatic analyzer illustrated in Fig. 1.

Fig. 4 is a timing chart illustrating the timing at which voltage is applied to the sensor at the automatic analyzer illustrated in Fig. 1.

Fig. 5 is a block diagram illustrating the data processing flow at the automatic analyzer illustrated in Fig. 1.

Fig. 6 is a view illustrating one example of the time sequential data of the intensity of emitted light which is measured at the time of measuring a sample.

Fig. 7 is a view illustrating one example of the time sequential data of the voltage value which is measured at the time of measuring a sample.

Fig. 8 is a view illustrating one example of the time sequential data of the current value which is measured at the time of measuring a sample.

Fig. 9 is a view illustrating one example of the time sequential data of the resistance value which is measured at the time of measuring a sample.

Fig. 10 is a block diagram illustrating the processing flow of the parts anomaly detection at the server.

Fig. 11 is a flow chart illustrating the detailed procedures of an alarm counting process and a parts diagnosing process included in the processing flow illustrated in Fig. 10.

Fig. 12 is a view illustrating one example of the setting screen for anomaly detection conditions.

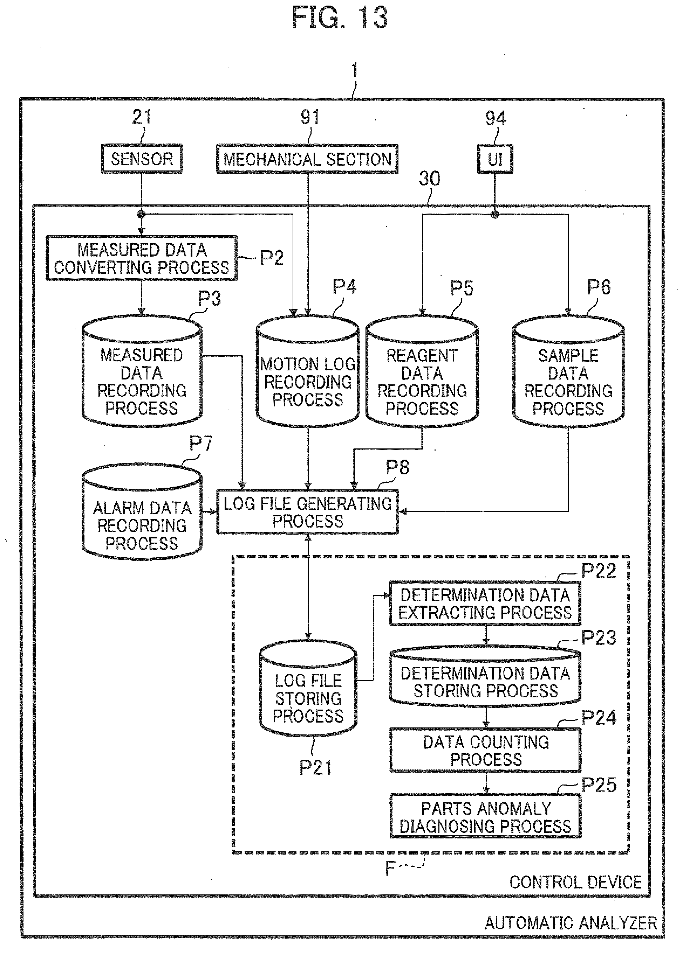

Fig. 13 is a block diagram illustrating the data processing flow at the parts anomaly detection system according to the second embodiment of the present invention.

Modes for Carrying Out the Invention

(Overview)

A parts anomaly detection system according to the present embodiment is a system that detects anomaly of parts of a liquid transport system for absorbing and discharging liquid with respect to a sensor for liquid sample inspection of an automatic analyzer.

The sensor for liquid sample inspection provided in the automatic analyzer is a sensor used for measuring analysis items of a biological sample in, for example, a biochemical analyzer, an immunological analyzer, a blood coagulation time measuring device, an ISE measuring device, and the like. An example of the sensor includes a flow cell-type sensor for electrochemical luminescence measurement. The flow cell-type sensor includes, for example, a flow cell, electrodes (a reference electrode, a counter electrode, and an action electrode) provided in the flow cell, and a photoelectric conversion sensor (photomultiplier tube or the like) disposed opposite to the reference electrode with the flow cell provided therebetween. This kind of sensor outputs, as response values, analog electrical signals (a current value, a voltage value, and a resistance value) generated between the counter electrode and the action electrode when a voltage is applied between the reference electrode and the action electrode, in addition to the measured value of the analysis item of the sample (concentration of the component to be analyzed). In the automatic analyzer, a sensor output (analog electrical signal outputted from the sensor) is generated at plural timings during the measurement cycle of the same sample, for example, when the sample is inspected, when the sensor is cleansed, and when an electrode is subjected to conditioning.

The constitutional parts of the liquid transport system for absorbing and discharging the liquid with respect to the sensor are diagnostic targets of the parts anomaly detection system. The liquid transport system includes, for example, a passage through which liquid is allowed to pass, plural valves for opening and closing the passage, and a syringe for generating a pressure difference for sucking and discharging the liquid in the passage. In addition, the liquid transported by the liquid transport system includes a sample, a reagent, and cleansing liquid. The sample includes at least one kind (one kind or plural kinds) among a specimen of a patient (blood, urine, or the like), a sample for calibration (standard sample), a QC (precision control) sample, and a dummy sample. The sample for calibration is a preparation sample that is measured to create a calibration curve during the calibration of the automatic analyzer. The QC sample is a preparation sample measured during QC of the automatic analyzer. The dummy sample is a predetermined sample measured as a preparation operation before the measurement of the specimen of the patient.

The parts anomaly detection system can be configured with, for example, a computer provided in the automatic analyzer. In addition, the parts anomaly detection system can be configured with a single computer or plural computers (servers, and the like) connected to a computer provided in the automatic analyzer via a network (a local area network, a global network, or the like). The parts anomaly detection system can also be configured with a computer provided in the automatic analyzer and at least one computer connected thereto.

The parts anomaly detection system includes storage devices (storage media such as a RAM, a ROM, an HHD, and an SSD) for storing data of the sensor output, and a processing device (CPU or the like) for processing the data recorded in the storage devices. The processing device detects the anomaly of the parts of the liquid transport system, for example, the valve, on the basis of the output of the sensor for liquid sample inspection in the automatic analyzer. In addition to the data of the sensor output, the storage devices store a parts anomaly detection program, various data used for the algorithm of the program, and the like.

In order to detect the anomaly of the parts, a set value (threshold value) is set in advance based on the relationship between the sensor output and the anomaly of the parts, and an algorithm for determining the presence or absence of the anomaly of the parts by simply comparing the sensor output with the set value can be applied.

In addition to the above, as a preferred example, an algorithm for computing a statistic value of the data of the sensor output as an index and detecting the anomaly of the parts of the liquid transport system, for example, the valve on the basis of the statistic value can be applied. As an example, there is an algorithm for reading from the storage device the data of the sensor data extracted over a set period, computing fluctuations of the data over the set period as the above statistic value, and determining that there is anomaly of the parts of the liquid transport system when the statistic value is equal to or larger than the set value. The set period is a period set in advance and stored in the storage device, and which is, for example, a period (the latest 24 hours, or the like) whose final segment is at present. At least one kind of sensor output acquired at the time of the measurement, cleansing, and conditioning described above can be used as the sensor output on which the statistic value is based. In the case where the anomaly of the parts is detected by comparing the sensor output with the set value, it is also possible to estimate which anomaly part of the liquid transport system is or the mode of the anomaly (anomaly mode) on the basis of the timing at which the sensor output is obtained. In this case, although it is possible to estimate on the basis of a single sensor output, it is also conceivable to estimate the anomaly part of the liquid transport system or the anomaly mode on the basis of plural sensor outputs outputted from the sensor at plural timings during the measurement cycle of the same sample.

In addition, it is also conceivable that the statistics of all the sensor outputs acquired during the operation of the automatic analyzer are collected, but it is preferable that the statistics of the sensor outputs extracted under specified conditions are collected as necessary. For example, there is an automatic analyzer equipped with a function of giving an alarm to measurement in which anomaly is observed at each timing of the measurement, cleansing, and conditioning. As an example, an alarm is recorded in the case where the measured value (concentration of the component to be analyzed) is higher or lower than a proper range, in the case where the EV value (effective value) of a current generated when a control voltage is applied to the electrodes is higher than a proper value, or in the case where the EV value of the amount of light emitted from a reaction product at the time of the measurement is lower than a proper value. The sensor output obtained at each timing of the measurement with the alarm given can be suitably used as the basis of the statistic value.

Here, as a result of intensive studies, the inventors, et al. of the present application have found that a change in the value of the sensor output such as the current generated in the electrode becomes large during the measurement in which an alarm is recorded in the automatic analyzer. In the case where a malfunction occurs in the liquid transport system to cause a trouble in replacement of the liquid inside the flow cell and there is no liquid inside the flow cell, which liquid should be present at suitable time, this may cause generation of an alarm. It can be said that there is a certain causal relationship between the generation of the alarm and the malfunction of the liquid transport system. Thus, by diagnosing the parts on the basis of the statistic value using the sensor output at the time of the measurement with an alarm given, the accuracy of detecting the anomaly of the parts is expected to be improved. In addition, if the anomaly is erroneously detected even though the parts of the liquid transport system are normal, the automatic analyzer must be unnecessarily stopped to check the anomaly. From the viewpoint of avoiding an unnecessary stop of the automatic analyzer, it may be advantageous to exclude the sensor outputs obtained in measurements with no alarm given, and to diagnose the parts by collecting only the statistics of the sensor outputs (electrical signals when giving an alarm) that possibly correlate with the malfunction of the liquid transport system.

Further, in the case where the statistics of the sensor outputs related to the measurements with an alarm given are collected, the processing device can be configured to select the type of alarm related to the sensor outputs as the targets of the statistics and adjust the sensitivity of anomaly detection. A configuration is exemplified in which, when the sensitivity is set as an anomaly detection condition with a user interface (a monitor or an input device) of the parts anomaly detection system, the processing device selects the type of alarm according to the set sensitivity, and detects the anomaly of the parts by collecting the statistics of the sensor outputs related to the selected alarm. From the viewpoint of adjusting the anomaly detection sensitivity, a configuration is also conceivable in which the processing device adjusts the set value (the value to be compared with the statistic value for anomaly determination) to adjust the sensitivity of anomaly detection. Specifically, a configuration is exemplified in which, when the sensitivity is set with the user interface, the processing device changes the set value according to the set sensitivity. It is obvious that there may be a configuration in which both the type of alarm and the set value are changed to adjust the sensitivity. For example, a configuration is exemplified in which data of a combination of the type of alarm and the set value is stored in the storage device in association with the set sensitivity, and the processing device changes the type of alarm and the set value according to the set sensitivity.

In addition, the concept of the parts anomaly detection described above is not necessarily limited to a computer system, but can also be embodied as a method. For example, the user can browse the log data of the sensor output and determine the anomaly of the parts of the liquid transport system on the basis of the sensor output picked up by paying attention to the presence or absence of an alarm, or the like.

[First Embodiment]

The present invention may be applied to an automatic analyzer. A detection unit mounted on the automatic analyzer includes a biochemical analyzer, an immunological analyzer, and the like. However, this is an example, and the present invention is not limited to the embodiments described below, but may be widely applied to an automatic analyzer equipped with a detection unit for analyzing a sample on the basis of the result of reaction with a reagent. For example, an automatic analyzer equipped with a mass spectrometer used for clinical inspection, a coagulation analyzer for measuring the clotting time of blood, or the like may also be included. In addition, the present invention is applicable to an automatic analysis system including a composite automatic analyzer equipped with plural kinds of detection units and at least one automatic analyzer. Concrete embodiments of a parts anomaly detection system of the present invention will be described below by using the drawings.

-Automatic analyzer-

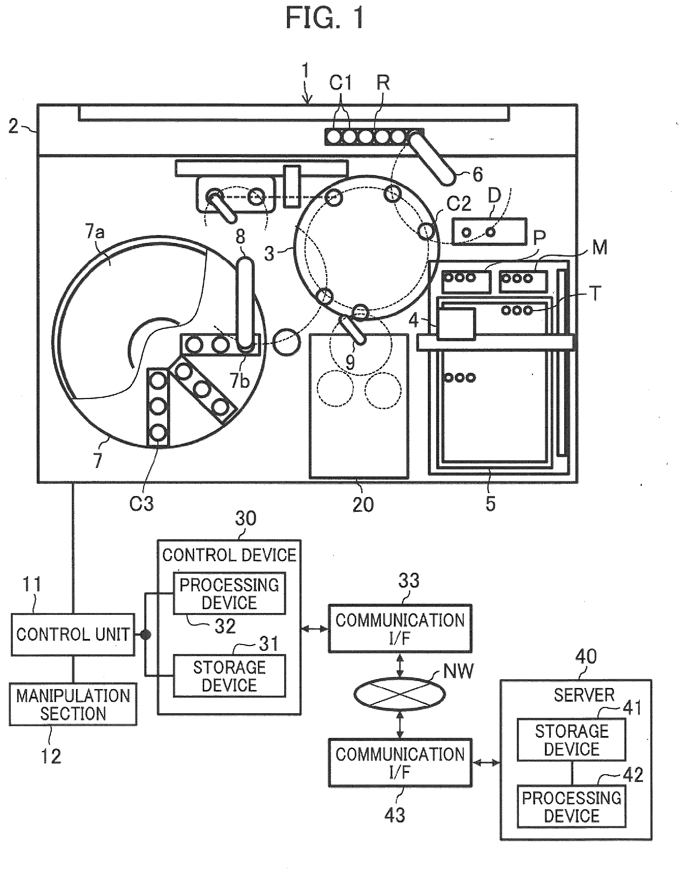

Fig. 1 is a plan view exemplarily illustrating one structural arrangement of an automatic analyzer, to which a parts anomaly detection system according to the first embodiment is applied. An automatic analyzer 1 of the drawing includes a rack transport line 2, an incubator disk (reaction disk) 3, a first transport mechanism 4, a retaining member 5, a sample dispensing nozzle 6, a reagent disk 7, a reagent dispensing nozzle 8, a second transport mechanism 9, a detection unit 20, a control unit 11, a manipulation device 12, and a control device 30.

The rack transport line 2 is a device for transporting a rack R, and transports the rack R to a sample dispensing position at which sample dispensing is performed by the sample dispensing nozzle 6. Plural sample vessels C1 for holding samples can be installed in the rack R. Although the example of Fig. 1 exemplifies a configuration for transporting a sample on a line, there is also a case in which a disk-shaped transport unit for transporting the sample by rotation is provided.

The incubator disk 3 is a rotary table-like device for installing reaction vessels C2, and plural reaction vessels C2 can be installed in an annular shape. The incubator disk 3 is rotationally driven by a drive device, which is not illustrated, and rotated, and can move an optional reaction vessel C2 to plural predetermined positions such as a dispensing position at which dispensing is performed by the sample dispensing nozzle 6.

The first transport mechanism 4 is a device that transports a sample dispensing tip T and the reaction vessel C2. The first transport mechanism 4 is operable in the three axial directions of XYZ along the rail, and transports the sample dispensing tip T and the reaction vessel C2 between the incubator disk 3, a stirring mechanism M, a disposal position D, a tip mount position P, and the retaining member 5. The stirring mechanism M is a device that stirs the sample housed in the reaction vessel C2. The disposal position D is a position provided with a disposal hole for disposing of the used sample dispensing tip T and reaction vessel C2. The tip mount position P is a position for mounting the sample dispensing tip T on the sample dispensing nozzle 6.

The retaining member 5 is a vessel for housing plural unused sample dispensing tips T and reaction vessels C2. The unused reaction vessel C2 picked up from the retaining member 5 is installed at a predetermined position of the incubator disk 3 by the first transport mechanism 4. Similarly, the unused sample dispensing tip T picked up from the retaining member 5 is transported by the first transport mechanism 4 and installed at the tip mount position P.

The sample dispensing nozzle 6 is a device for sucking and discharging the sample. The sample dispensing nozzle 6 is configured to be capable of rotating and vertically moving, and the nozzle tip end is moved and lowered above the tip mount position P, and then the sample dispensing tip T prepared at the tip mount position P is press-fitted and mounted into the nozzle tip end. When the sample dispensing tip T is mounted to the nozzle tip end, the sample dispensing nozzle 6 moves and lowers the nozzle tip end above the sample vessel C1 installed in the rack R, and sucks a predetermined amount of sample from the sample vessel C1. When the sample is sucked, the sample dispensing nozzle 6 moves and lowers the nozzle tip end above the incubator disk 3, and discharges the sample to the unused reaction vessel C2 installed in the incubator disk 3. When the discharge of the sample is finished, the sample dispensing nozzle 6 moves the nozzle tip end above the disposal position D, and disposes of the used sample dispensing tip T into the disposal hole.

The reagent disk 7 is a rotary table-like device in which plural reagent vessels C3 are installed. The upper part of the reagent disk 7 is covered with a disk cover 7a (illustrated in a partially broken manner in Fig. 1), and the inside thereof is kept at a predetermined temperature. The disk cover 7a is provided with an opening (not illustrated) at an opening portion 7b set near the incubator disk 3.

The reagent dispensing nozzle 8 is a device for sucking and discharging the reagent. The reagent dispensing nozzle 8 is capable of rotating and vertically moving in the same manner as the sample dispensing nozzle 6, and moves and lowers the nozzle tip end to the opening portion 7b of the reagent disk 7 for sucking a predetermined amount of reagent from a predetermined reagent vessel C3 transported to the opening portion 7b. Then, the reagent dispensing nozzle 8 pulls up the nozzle tip end from the reagent vessel C3, moves and lowers it to a predetermined position of the incubator disk 3, and discharges the reagent to the reaction vessel C2 containing the sample transported to this position.

The reaction vessel C2 into which the sample and the reagent are injected is transported to a predetermined position by rotation of the incubator disk 3 and transferred to the stirring mechanism M by the first transport mechanism 4. The stirring mechanism M stirs and mixes the sample and the reagent inside the reaction vessel C2 by rotating, for example, the reaction vessel C2. The reaction vessel C2, where stirring has been finished, is transferred again to a predetermined position of the incubator disk 3 by the first transport mechanism 4.

The second transport mechanism 9 is a device for transferring the reaction vessel C2 between the incubator disk 3 and the detection unit 20, and is configured to be capable of rotating and vertically moving. The second transport mechanism 9 picks up the reaction vessel C2 containing reaction liquid regarding which a predetermined reaction time has passed after returned to the incubator disk 3 after mixing the sample and the reagent, and transfers it to the detection unit 20.

The detection unit 20 is a measuring instrument for measuring measurement items such as specific biological components and chemical substances contained in the reaction liquid inside the reaction vessel C2. The anomaly detection targets in the present embodiment are parts of the liquid transport system (described later) used in the detection unit 20.

The_control unit 11 is a computer (forming a unit with a mechanical section 91) attached to the mechanical section 91 (the disks, the transport mechanisms, the dispensing nozzles, the detection unit 20, and the like described above) of the automatic analyzer 1. The control unit 11 controls the mechanical section 91 of the automatic analyzer 1 in response to a signal inputted from the manipulation device 12 according to a manipulation of the user or a signal inputted from the control device 30.

The control device 30 is a computer including a storage device 31 such as a RAM, a ROM, an HDD, and an SSD, a processing device 32 such as a CPU, and the like, and is connected to the mechanical section 91 of the automatic analyzer 1 via the control unit 11. The control device 30 controls each device of the mechanical section 91 of the automatic analyzer 1, and records and processes data inputted from the detection unit 20 and the like. In addition to the case where the control device forms a unit with, for example, the mechanical section 91 and the control unit 11 of the automatic analyzer 1, the control device 30 is installed separately from the mechanical section 91 of the automatic analyzer 1 and directly connected to the control unit 11 in a wired or wireless manner in some cases.

In the present embodiment, the control device 30 is connected to a server 40 via a communication interface 33, a network NW, and a communication interface 43. The server 40 is also a computer including a storage device 41 such as a RAM, a ROM, an HDD, and an SSD, a processing device 42 such as a CPU, and the like. In the present embodiment, the parts anomaly detection function of the liquid transport system used in the automatic analyzer 1 is mounted on the server 40. The server 40 records the data of the electric signal outputted from a sensor 21 of the automatic analyzer 1 in the storage device 41, processes the data recorded in the storage device 41 with the processing device 42, and detects the anomaly of the parts of the liquid transport system of the automatic analyzer 1 on the basis of the sensor output (described later).

-Liquid transport system-

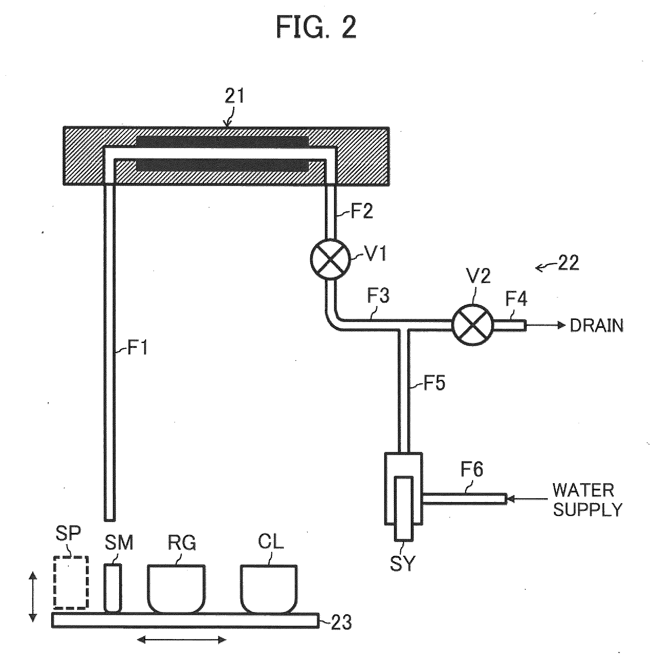

Fig. 2 is an exemplary view of the liquid transport system with which the automatic analyzer illustrated in Fig. 1 is provided. The detection unit 20 of the automatic analyzer 1 is provided with a flow cell-type sensor 21 (described later), a liquid transport system 22, and a turntable 23. Here, the configurations of the turntable 23 and the liquid transport system 22 will be described.

An auxiliary reagent vessel RG for storing an auxiliary reagent and a cleanser vessel CL for storing cleansing liquid are installed on the turntable 23, and a stand-by position SP and a reaction vessel installing position SM are provided. The auxiliary reagent is chemical solution for causing a luminescence reaction of a reaction product in the reaction liquid. The cleansing liquid is liquid for cleansing the passage of the liquid transport system 22 and the flow cell of the sensor 21. The reaction vessel C2 transferred from the incubator disk 3 is installed at the reaction vessel installing position SM. The turntable 23 is provided with a drive device (not illustrated), and is rotated and elevated by being driven by the drive device controlled by a signal from the control unit 11. For example, the reaction vessel C2, the cleanser vessel CL, or the auxiliary reagent vessel RG is transported, by the turntable 23, to the liquid suction position of the liquid transport system 22 at suitable time, or the stand-by position SP is aligned by the turntable 23.

The liquid transport system 22 includes passages F1 to F6 through which liquid is allowed to pass, plural valves V1 and V2 for opening and closing these passages, and a syringe SY for generating a pressure difference for sucking and discharging the liquid in the passages. The passage F1 is a passage (tube) for sending the sucked liquid to the sensor 21, and a suction nozzle (not illustrated) is mounted to the tip end thereof, and the other end thereof is connected to the sensor 21. The passage F2 is connected to the sensor 21 on the side opposite to the passage F1, and connects the sensor 21 and the valve V1 to each other. The passage F3 connects the valves V1 and V2 to each other. The passage F4 connects the valve V2 and a drain tank (not illustrated) to each other. In addition, the passage F5 branches from the passage F3 and connects the passage F3 and the syringe SY to each other. The passage F6 connects the syringe SY and a system water supply pump (not illustrated) to each other. The valves V1 and V2 are, for example, electromagnetic valves, and normally open type electromagnetic valves can also be used, but the valves are assumed to be normally closed type electromagnetic valves in the present embodiment.

For example, when the reaction vessel C2, the auxiliary reagent vessel RG, or the cleanser vessel CL is transported to the suction position of the liquid transport system 22, and the valve V1 is opened and the syringe SY is driven for suction in a state where the valve V2 is closed, the liquid is sucked from the vessel such as the reaction vessel C2 via the suction nozzle. Accordingly, the liquid is absorbed into the sensor 21 via the passage F1 and further into the passages F3 and F5. In addition, for example, when the valve is opened and the syringe SY is driven for discharge in a state where the valve V1 is closed, the liquid absorbed into the passages F3 and F5 is discharged into the drain tank.

-Sensor-

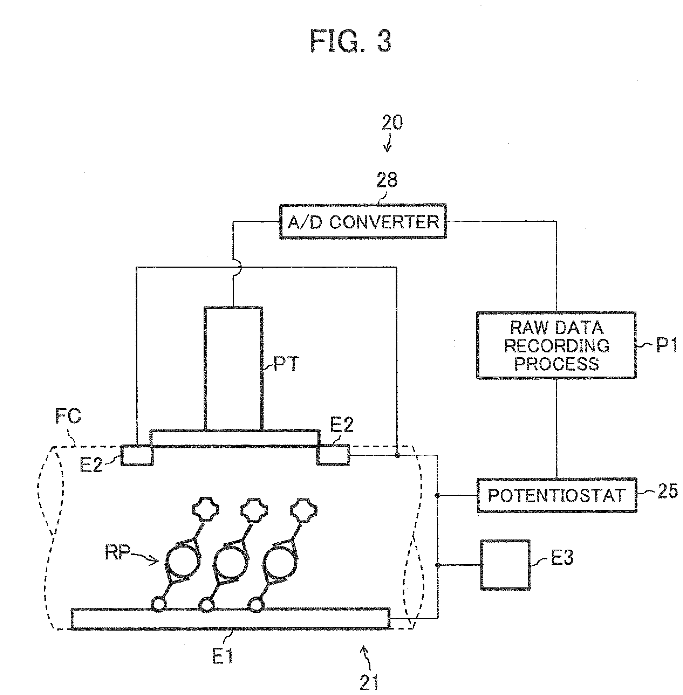

Fig. 3 is an exemplary view of the sensor used for measuring a sample at the automatic analyzer illustrated in Fig. 1. The detection unit 20 of the automatic analyzer 1 is provided with the flow cell-type sensor 21. The sensor 21 includes a flow cell FC, three electrodes (a reference electrode E1, a counter electrode E2, and an action electrode E3) provided inside the flow cell FC, and a photoelectric conversion sensor (for example, a photomultiplier tube (PT)) for measuring the intensity of light emitted from a reaction product RP.

The three electrodes are controlled to become the desired voltage by a potentiostat 25. When a specific voltage is applied between the reference electrode E1 and the action electrode E3 by the potentiostat 25 in a state where the reaction product RP between the sample and the reagent in the reaction liquid is collected at the reference electrode E1, the reaction product RP emits light. The photomultiplier tube PT is disposed on the side (upper side in Fig. 3) opposite to the reference electrode E1 with the flow cell FC disposed therebetween, and the photomultiplier tube PT detects the intensity of light emitted from the reaction product RP.

The intensity of emitted light detected by the photomultiplier tube PT is quantified by an A/D converter 28, and recorded in the storage device 31 (or the storage device of the sensor 21) together with the measurement date and time as raw data of the measured value of the measurement item through a raw data recording process P1. At this time, by applying a voltage between the reference electrode E1 and the action electrode E3, the current value, the voltage value, and the resistance value generated between the counter electrode E2 and the action electrode E3 are measured by the potentiostat 25. In the present embodiment, not only the output of the photomultiplier tube PT but also the voltage value applied to the reference electrode E1 and the action electrode E3, and the current value, the voltage value, and the resistance value generated between the counter electrode E2 and the action electrode E3 are recorded in the raw data recording process P1.

-Operation of automatic analyzer-

Calibration and QC measurement are performed at suitable time in order to qualitatively and quantitatively analyze a component to be analyzed in the specimen of the patient, which is an unknown sample, with high accuracy. For example, in the case of quantitative analysis, the automatic analyzer 1 is operated on a daily basis according to the following work procedures (1) to (5).

(1) Start-up of device

First, the automatic analyzer 1 is started up by turning the power on. In addition, the reagent vessel C3 is installed to initially fill the reagent, the temperature inside the reagent disk 7 is adjusted, internal standard liquid is continuously measured by applying a constant voltage to the electrodes to check whether the potential of the electrodes of the sensor 21 is stable, and maintenance is performed as necessary.

(2) Calibration

A high-concentration standard sample and a low-concentration standard sample for which the concentrations of the measurement items (components to be analyzed) are known are measured. By these measurements, a relational expression (calibration curve) between the concentrations of the measurement items and the output of the sensor 21 (photomultiplier tube PT) is created. However, the frequency of the calibration differs depending on the measurement item, and for example, the calibration for each measurement item is performed periodically (for example, in a one-month cycle) in order.

(3) QC measurement

Plural QC samples having a known possible concentration range for the measurement items and having different concentration levels are measured, and the concentrations of the measurement items in the QC sample are computed using the calibration curve created by calibration. By checking whether the computed concentrations are within the known concentration range of the QC sample, it is confirmed whether the calibration curve is appropriate. The QC measurement is frequently carried out because it is regarded as state confirmation to guarantee the measurement result of the specimen of the patient. For example, the QC measurement is performed at a frequency of 1 to 3 times/day in parallel with plural measurement items.

(4) Measurement of specimen of patient

The specimen of the patient regarding which the concentrations of the measurement items are unknown is measured, and the concentrations of the measurement items are computed using the calibration curve. Before this measurement of the specimen of the patient, what is called background measurement or dummy measurement is performed to confirm the state of the automatic analyzer 1 in some cases.

(5) Shut down of device

Cleaning, checking, or the like of each part of the automatic analyzer 1 is performed as necessary, and the automatic analyzer 1 is shut down by turning the power off.

-Measurement cycle-

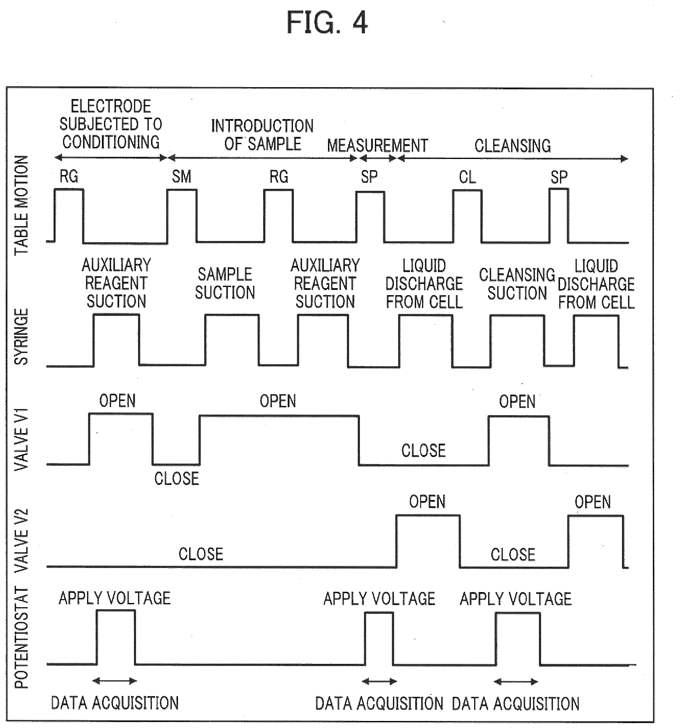

Fig. 4 is a timing chart illustrating the timing at which voltage is applied to the sensor at the automatic analyzer illustrated in Fig. 1.
As described above, the calibration, the QC measurement, and the measurement of the specimen of the patient are performed at suitable time from the time when the device is started up to the time when the device is shut down, and the sample (the specimen of the patient, the standard sample, the QC sample, the dummy sample, and the like) is measured in each step. The measurement operation in each step is carried out in a series of cycles of subjecting electrode to conditioning, introduction of sample, measurement, and cleansing as illustrated in Fig. 4.
For example, in the step of subjecting electrode to conditioning, the auxiliary reagent vessel RG is transported to the suction position of the liquid transport system 22 by the operation of the turntable 23 as illustrated in Fig. 4. When the auxiliary reagent vessel RG reaches the suction position, the valve V1 is opened in a state where the valve V2 is closed, the syringe SY is driven to suck the auxiliary reagent from the auxiliary reagent vessel RG, and the auxiliary reagent is introduced into the flow cell FC. In parallel with the absorption operation of the auxiliary reagent by the syringe SY, a voltage of a specific pattern is applied to the electrodes by the potentiostat 25 for a certain period of time, and the electrodes become a suitable state for measurement. When the conditioning of the electrodes is completed in this way, the valves V1 and V2 are closed, and the absorption operation by the syringe SY and the application of the voltage to the electrodes are stopped. In addition, the sensor output is recorded while the voltage is applied to the electrodes.
In the subsequent step of introduction of sample, the reaction vessel C2 installed at the reaction vessel installing position SM is transported to the suction position of the liquid transport system 22 by the operation of the turntable 23. When the reaction vessel C2 reaches the suction position, the valve V1 is opened while the valve V2 is closed, the syringe SY is driven to suck the reaction liquid from the reaction vessel C2, and the reaction liquid is introduced into the flow cell FC. Further, the auxiliary reagent vessel RG is transported to the suction position of the liquid transport system 22 by the operation of the turntable 23 while the valve V1 is opened. When the auxiliary reagent vessel RG reaches the suction position, the syringe SY is driven to suck the auxiliary reagent from the auxiliary reagent vessel RG, and the auxiliary reagent is introduced into the flow cell FC. When the step of introduction of sample is completed in this way, the valves V1 and V2 are closed, and the absorption operation by the syringe SY is stopped.
In the measurement step, the stand-by position SP is moved to the suction position of the liquid transport system 22 by the operation of the turntable 23, and a voltage necessary for the light emission reaction of the reaction product RP captured by the reference electrode E1 in the step of introduction of sample is applied by the potentiostat 25. In addition, the sensor output is recorded while the voltage is applied to the electrodes.
In the subsequent cleansing step, the valve V2 is opened in a state where the valve V1 is closed, and the syringe SY is driven to discharge the auxiliary reagent and the like into the drain tank. Thereafter, the valves V1 and V2 are closed, and the cleanser vessel CL is transported to the suction position of the liquid transport system 22 by the operation of the turntable 23. When the cleanser vessel C2 reaches the suction position, the valve V1 is opened while the valve V2 is closed, the syringe SY is driven to suck the cleansing liquid from the cleanser vessel C2, and the cleansing liquid is introduced into the flow cell FC. During this time, in order to prevent the reaction product RP from remaining in the flow cell FC, a voltage whose pattern is different from that in the step of electrode subjected to conditioning is applied to the electrodes for a certain period of time in a state where the cleansing liquid flows into the flow cell FC. By applying a voltage

EP 4 481 391 A1

to the electrodes, the reaction product RP or the like adhering to the electrodes is peeled off, and the peeled reaction product RP is washed away with the cleansing liquid to be discharged from the flow cell FC. Even in the cleansing step, the sensor output is recorded while a voltage is applied to the electrodes, and the valves V1 and V2 are closed when the absorption of the cleansing liquid is completed. Thereafter, the stand-by position SP is moved to the suction position of the liquid transport system 22 by the turntable 23, the valve V2 is opened in a state where the valve V1 is closed, and the cleansing liquid is discharged to the drain tank by the syringe SY. Finally, the valve V2 is closed, and return is made to the state before starting of the step of subjecting electrode to conditioning.

Since the set values of the voltages applied to the electrodes in the respective steps of subjecting electrode to conditioning, measurement, and cleansing are different from each other, the voltages applied to the electrodes at plural timings by the potentiostat 25 during the same measurement cycle are complicatedly controlled. In the sensor 21, the voltages whose patterns are complicated are precisely repeatedly applied to the electrodes in association with the measurement of the samples (the specimen of the patient, the standard sample, the QC sample, the dummy sample, and the like), and the electric signals of the voltage, the current, the resistance, and the like generated in the electrodes in association with that and the measured values of the concentrations of the components to be analyzed are output.

-Data processing flow (automatic analyzer)-

An alarm is recorded in the automatic analyzer 1 in the case where anomaly is observed in each step of subjecting electrode to conditioning, measurement, and cleansing. Specifically, an alarm is recorded in the case where the measured value (concentration of the component to be analyzed) is out of a proper range (in the case where it is higher or lower), in the case where the EV value of the current generated at the time of application of the voltage is higher than a proper value, and in the case where the EV value of the amount of light emitted from the reaction product RP is lower than a proper value. For example, the current value measured in the step of subjecting electrode to conditioning may increase (for example, approximately 15 mA) from a normal value (for example, approximately 10 mA) if the cleansing liquid inside the flow cell FC has not been replaced with the auxiliary reagent. The parts anomaly detection system of the present embodiment detects the anomaly of the parts of the liquid transport system 22 on the basis of the output of the sensor 21 at the time of measurements with these alarms given. In particular, in the present embodiment, the anomaly of the parts of the liquid transport system 22 is detected on the basis of only the sensor output related to the measurement with an alarm given among the outputs of the sensor 21.

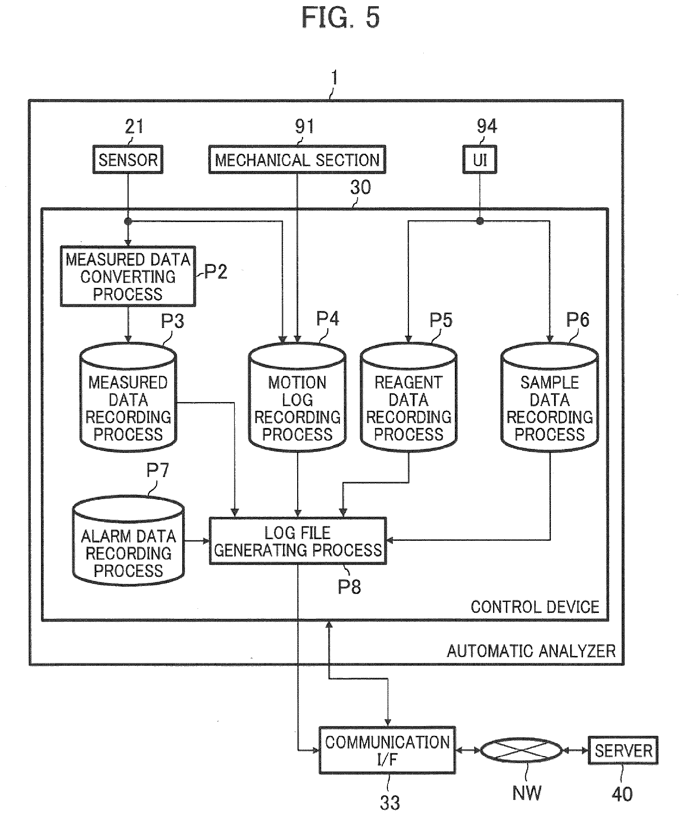

Fig. 5 is a block diagram illustrating the processing flow at the automatic analyzer illustrated in Fig. 1. Data is inputted to the control device 30 of the automatic analyzer 1 from the sensor 21, the mechanical section 91, a sample data reading device 92, the reagent data reading device 93, and a UI (user interface) 94.

To the control device 30, as an input from the sensor 21, data recorded in the raw data recording process P1 (Fig. 3) is inputted at any time. The data inputted from the sensor 21 to the control device 30 includes not only the data of the measurement cycle of the measurement of the specimen of the patient, but also the data of the measurement cycle of each measurement type, for example, the QC measurement, the calibration, or even the dummy measurement performed as a preparatory operation immediately before the measurement of the specimen of the patient.

As described above, the mechanical section 91 is a general term of each hardware (the sample dispensing nozzle 6, the incubator disk 3, and the like) mounted on the automatic analyzer 1. The data inputted from the mechanical section 91 to the control device 30 is, for example, log data such as the operation timing, operation amount, and current value of each motor, the signal of the sensor used for controlling each motor, and the opening/closing timings and current values of the fluid valves (valves V1, V2, and the like).

The sample data reading device 92 is a device (for example, a reader of a bar code or an RFID) for reading registration data of a sample, and is provided in the automatic analyzer 1. A storage medium for a bar code, an RFID, and the like is given to the sample vessel C1, and the data of the sample recorded in the storage medium is read by the sample data reading device 92. The data read by the sample data reading device 92 and inputted to the control device 30 is, for example, a sample ID.

The reagent data reading device 93 is a device (for example, a reader of a bar code or an RFID) for reading registration data of a reagent, and is provided in the automatic analyzer 1. A storage medium for a bar code, an RFID, and the like is given to the reagent vessel C3, and the data of the reagent recorded in the storage medium is read by the reagent data reading device 93. The data read by the reagent data reading device 93 and inputted to the control device 30 is, for example, the ID, lot number, expiration date, and the like of the reagent.

The UI 94 includes a monitor and an input device provided in the automatic analyzer 1, and is used for the user to browse data and input data to the control device 30. Although the data that can be inputted to the control device 30 by using the UI 94 varies, there are exemplified the ID, lot number, expiration date, on-board expiration date, and required residual amount of the reagent, as data related to the reagent and the auxiliary reagent. In addition, there are exemplified the sample ID, the measurement type (measurement of the specimen of the patient, the QC measurement, the calibration, the dummy measurement, and the like) for the sample ID, and the measurement item, as data related to the sample.

Various data thus inputted to the control device 30 from the sensor 21 and the like is processed in real time by the processing device 32 and transmitted to the server 40 as a log file via the communication interface 33. As processes executed by the processing device 32, processes such as a measured data converting process P2 and a measured data recording process P3 are included regarding to, for example, the sensor output. Other processes executed by the processing device 32 include a motion log recording process P4, a reagent data recording process P5, a sample data recording process P6, an alarm data recording process P7, and a log file generating process P8. Each process will be sequentially described below.

-Measured data converting process

In the measured data converting process P2, the processing device 32 converts the sensor output (raw data) inputted from the sensor 21 into an effective value. The sensor output inputted from the sensor 21 is each raw data of the intensity of emitted light, the current value, the voltage value, and the resistance value.

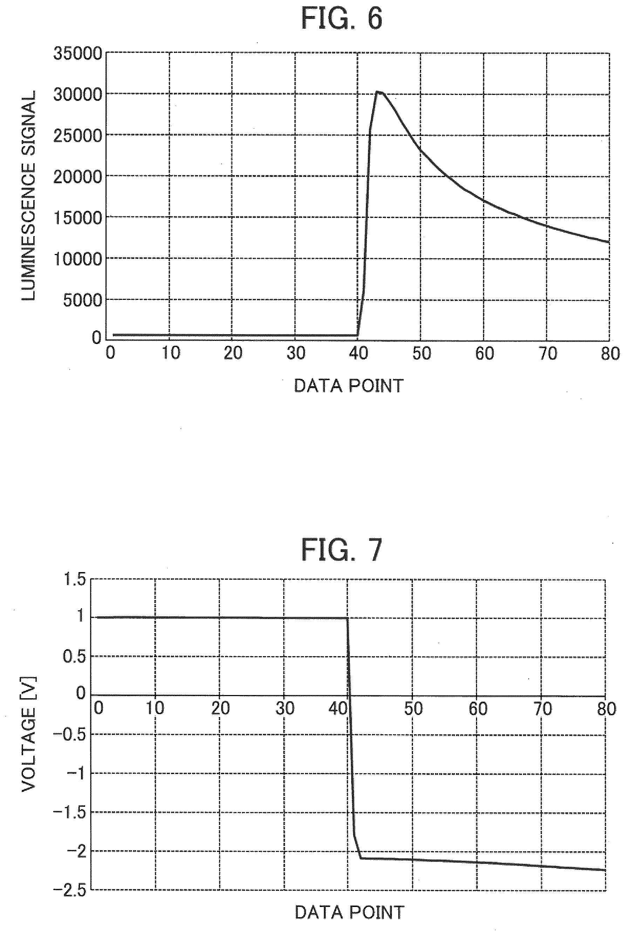

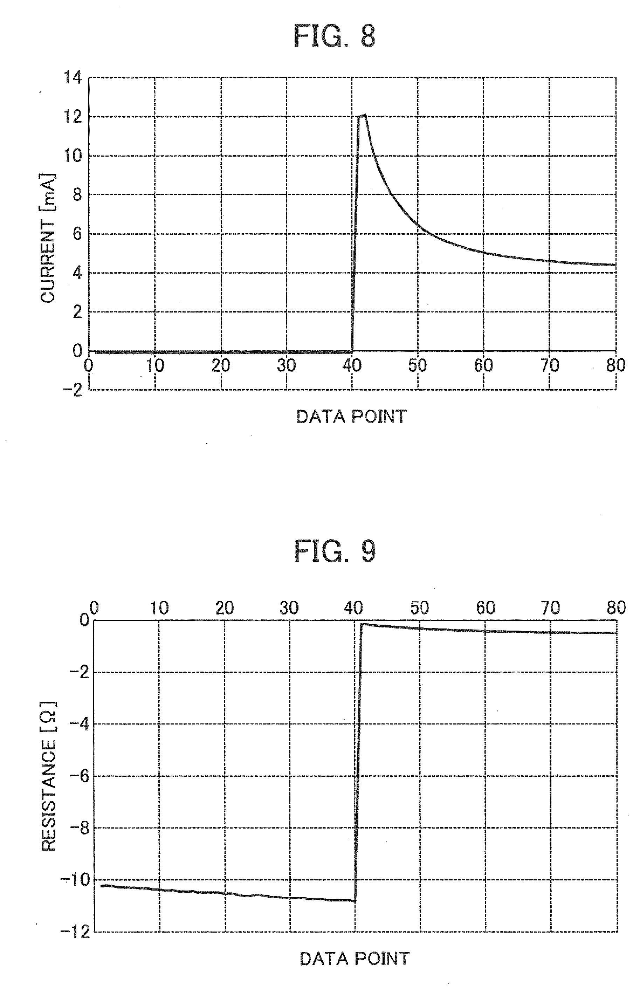

Here, Fig. 6 illustrates one example of time sequential data of the intensity of emitted light measured at the time of measuring a sample, Fig. 7 illustrates one example of time sequential data of the voltage value measured at the time of measuring a sample, Fig. 8 illustrates one example of time sequential data of the current value measured at the time of measuring a sample, and Fig. 9 illustrates one example of time sequential data of the resistance value measured at the time of measuring a sample. The horizontal axis of each drawing corresponds to time, and represents the time change of each value. At the time of measuring the sample, the control device 30 applies a voltage to the electrodes at a specific timing from the start of the measurement to obtain data. In the examples illustrated in Fig. 6 to Fig. 9, a predetermined voltage is applied to the reference electrode E1 and the action electrode E3 at the timing of the sensor output at the 41st point from the start of the measurement counted by the sensor output cycle in each case.

Under this control characteristic, in the measured data converting process P2, the processing device 32 converts the sensor output (raw data) inputted from the sensor 21 for each measurement into an EV value (effective value) using the following two equations stored in advance in the storage device 31 (for example, ROM).

[Equation 1]

$$\text{Effective value} = \sum_{i=41}^{120} Signal_i - Blank_{ave}$$

[Equation 2]

$$Blank_{ave} = \left.\Sigma_{i=1}^{40} Signal_i \middle/ 40\right.$$

-Measured data recording process

In the measured data recording process P3, the processing device 32 allocates a measurement ID for each measurement, and records the raw data and the effective value of the measured value in the storage device 31 in association with the measurement ID.

-Motion log recording process

In the motion log recording process P4, the processing device 32 records motion logs inputted from the mechanical section 91 and the sensor 21 in the storage device 31. The motion logs inputted from the mechanical section 91 and the like include, for example, the operation timing and operation amount of each motor, the current value of the motor, the signal of the sensor used for controlling the operation of the motor, the opening/closing timings and current values of the fluid valves (valves V1, V2, and the like), and the like.

-Reagent data recording process

In the reagent data recording process P5, the processing device 32 confronts the reagent data inputted from the reagent data reading device 93 with the condition data recorded in advance in the storage device 31, and records the reagent data in the storage device 31 as a usable reagent in the case where the inputted reagent data matches the condition data. The condition data with which the reagent data is confronted includes the ID, lot number, expiration date, on-board expiration date, required residual amount, and the like of the reagent, is inputted by the UI 94 or another computer to the control device 30 via the communication interface 33, and is recorded in the storage device 31. In addition, in the reagent data recording process P5, the processing device 32 records the history of the used reagent in the storage device 31 for each measurement ID. Accordingly, the raw data and the effective value of the measured value are associated with the data of the reagent used for the measurement via the measurement ID.

-Sample data recording process

In the sample data recording process P6, the processing device 32 confronts the sample data inputted from the sample data reading device 92 with the condition data recorded in advance in the storage device 31, records the sample data in the storage device 31 as a measurable sample in the case where the inputted sample data matches the condition data, and executes the measurement at suitable time. The condition data with which the sample data is confronted includes the sample ID, the measurement type (the QC measurement, the measurement of the specimen of the patient, and the like), the measurement item, and the like, is inputted by the UI 94 or another computer to the control device 30 via the communication interface 33, and is recorded in the storage device 31.

-Alarm data recording process

In the alarm data recording process P7, the processing device 32 determines the presence or absence of anomaly in the measurement every time the measurement is performed (every time the control voltage is applied between the reference electrode E1 and the action electrode E3 of the sensor 21). In the case where there is anomaly in the measurement, alarm data is given to a data set related to the measurement determined as anomaly and recorded in the storage device 31. The presence or absence of the anomaly of the measurement is determined, for example, by comparing each of the measured value (concentration of the component to be analyzed), the EV value of the current generated when the control voltage is applied to the electrodes, and the EV value of the amount of light emitted from the reaction product with a preset set value. For example, in the case where the measured value is higher than the set value thereof (the upper-limit value of the proper range) and in the case where the measured value is lower than the set value thereof (the lower-limit value of the proper range), it is determined that there is anomaly in the measurement, and an alarm is given to the data set of the output of the sensor 21 acquired in this measurement. In addition, in the case where the EV value of the current value generated between the counter electrode E2 and the action electrode E3 is higher than the set value thereof and in the case where the amount of light emitted from the reaction product RP is lower than the set value thereof, it is also determined that there is anomaly in the measurement, and an alarm is given to the data set of the sensor output acquired in the measurement. The alarm data includes information of the content of the anomaly (the measured value is excessively large/the measured value is excessively small/the EV value of the current is excessively large/the EV value of the amount of emitted light is excessively small).

-Log file generating process

In the log file generating process P8, the processing device 32 generates a log file by aggregating data necessary for detecting the anomaly of the parts of the liquid transport system, for example, the raw data and the alarm data outputted from the sensor 21, the measurement type, and the like, for each measurement (each measurement timing of the measurement cycle) among the data stored in the storage device 31. In addition, the processing device 32 transmits the log file to the server 40 via the communication interface 33 and the network NW. The log file is created for each measurement, sequentially uploaded, and accumulated in the server 40.

-Parts anomaly detection processing flow (server)-

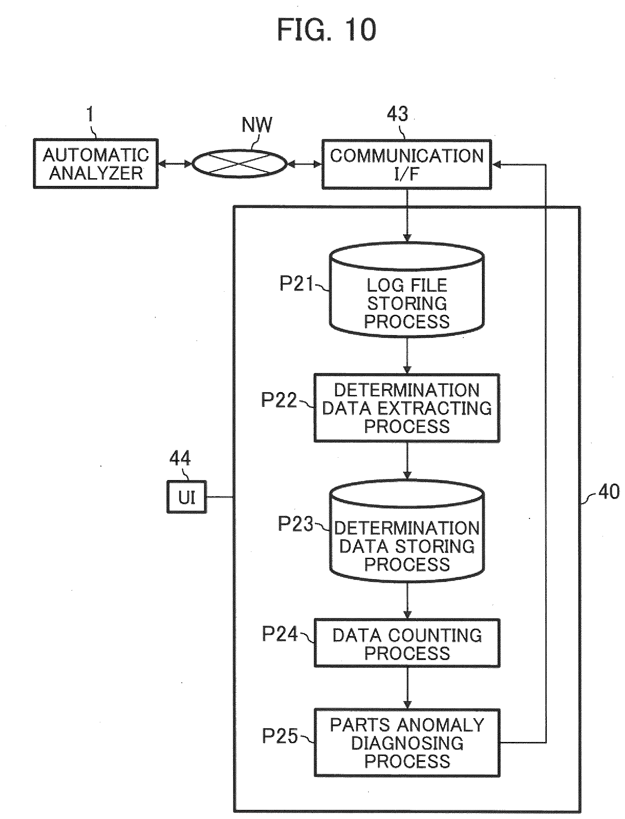

Fig. 10 is a block diagram illustrating the processing flow of the parts anomaly detection at the server. In the present embodiment, a parts anomaly detection function is executed by the server 40, and the server 40 configures the anomaly detection system of the parts of the liquid transport system 22. When the log file is received from the automatic analyzer 1, the processing device 42 records the log file in the storage device 41 in a log file storing process P21. In the subsequent determination data extracting process P22, the processing device 42 extracts diagnostic data as a basis for detecting the anomaly of the parts of the liquid transport system 22, specifically data with an alarm given, from the log file stored in the storage device 41. In the subsequent determination data storing process P23, the processing device 42 sequentially stores the extracted diagnostic data in the storage device 41.

Thereafter, in a data counting process P24, the processing device 42 counts the number of alarms during the set period on the basis of the extracted diagnostic data. The set period is a period (for example, the latest 24 hours) whose final segment is at present. In addition, the number of settings is a preset value (for example, 20). In addition, when the number of alarms during the set period reaches the number of settings, the processing device 42 diagnoses the state of the parts of the liquid transport system 22 on the basis of the diagnostic data during the set period in a parts diagnosing process P25. The diagnosis result (the presence or absence of the anomaly of the parts) is transmitted to the automatic analyzer 1 via the communication interface 43 and the network NW, and notified to the user or the like via the display of the UI 94. The diagnostic result can also be displayed on a UI (user interface) 44 of the server 40. The UI 44 of the server 40 is similar to the UI 94 of the control device 30 of the automatic analyzer 1.

-Determination computing process-

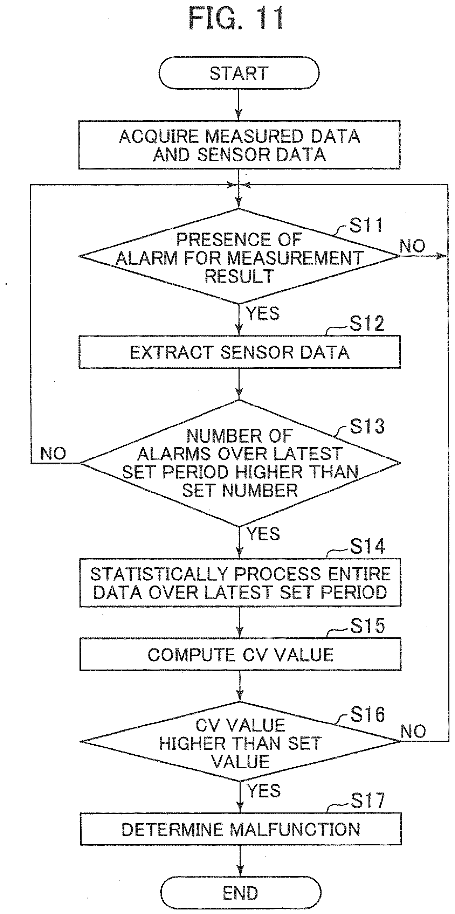

Fig. 11 is a flow chart illustrating the detailed procedures of an alarm counting process and a parts diagnosing process included in the processing flow illustrated in Fig. 10.

As illustrated in Fig. 11, the processing device 42 acquires the data set of the sensor outputs from the automatic analyzer 1 and sequentially records the acquired data set in the storage device 41. This procedure corresponds to the log file storing process P21 described in Fig. 10.

When the data set is newly recorded in the storage device 41, the processing device 42 determines whether the data set contains the alarm data (Step S11). If the alarm data is given, the processing device 42 extracts the data as diagnostic data and stores it in the storage device 41 (Step S12). The procedures of Steps S11 and S12 correspond to the determination data extracting process P22 and the determination data storing process P23 described in Fig. 10, respectively.

In addition, the processing device 42 counts the number of alarms generated during the set period (the latest 24 hours) on the basis of the extracted diagnostic data, and determines whether the number of alarms during the set period reaches the number of settings (20) or more (Step S13). In the case where the number of alarms generated during the set period is less than the number of settings and the normal status of the parts of the liquid transport system 22 is estimated, the processing device 42 continues to repeat the processes of Steps S11 to S13. In contrast, in the case where the number of alarms generated during the set period reaches the number of settings or more and the anomaly of the parts of the liquid transport system 22 is suspected, the processing device 42 shifts the procedure to the procedure of diagnosing the parts of the liquid transport system 22. The procedure of Step S13 corresponds to the data counting process P24 described in Fig. 10.

When shifting to the procedure of diagnosing the parts of the liquid transport system 22 is made, the processing device 42 first computes a statistic value for evaluating the state of the parts on the basis of the data of the sensor output. Although the method of the statistics can be appropriately changed, the data of the sensor outputs extracted from the set period is read from the storage device 42, and the fluctuations of the data during the set period are computed as a statistic value in the present embodiment. As a concrete example, Fig. 11 exemplifies an algorithm that collects the statistics of the extracted diagnostic data during the set period (Step S14), and on the basis of the value, computes a variation count CV as the statistic value (fluctuations) (Step S15).

In the procedure of Step S14, the standard deviation of the sensor output (the EV value of the current in Fig. 8) is obtained using the following equation.

[Equation 3]

$$SD = \sqrt{\frac{\sum_{i=1}^{n}(Efective\ value_i - Average_{effective\ value})}{n}}$$

In the procedure of the subsequent Step S15, the processing device 42 computes the variation count CV by dividing the computed standard deviation by the average value of the EV value (the following equation).

[Equation 4]

$$CV = \frac{SD}{Average_{effective\ value}}$$

After obtaining the statistic value (variation count CV in the present embodiment) for evaluating the state of the parts, the processing device 42 detects the anomaly of the parts of the liquid transport system 22 on the basis of the statistic value. As a concrete example, in the present embodiment, the variation count CV is compared with a preset set value to determine whether the variation count CV is equal to or larger than the set value (Step S16). If the statistic value is less than the set value, it is estimated that the parts of the liquid transport system 22 are normally functioning, but if the variation count CV is equal to or larger than the set value, the anomaly of the parts of the liquid transport system 22 is suspected. The parts anomaly detection system is configured in consideration of this point, and in the case where the variation count CV is equal to or larger than the set value, the processing device 42 transmits display data to the UI 44 or the UI 94, notifies the user that the anomaly of the parts of the liquid transport system 22 is suspected (Step S17), and terminates the flow. In the case where the variation count CV is less than the set value, the processing device 42 returns the procedure to Step S11 and continues the processes of Steps S11 to S16.

-Determination condition setting screen-

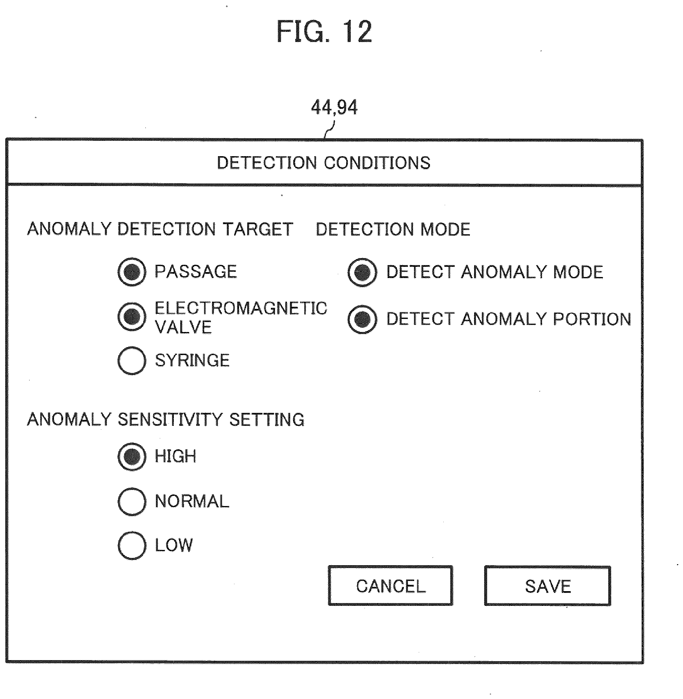

Fig. 12 is a view illustrating one example of the setting screen for anomaly detection conditions. The setting screen exemplified in the drawing is displayed on the UI 44 (Fig. 10) of the server 40, and the anomaly detection conditions of the parts of the liquid transport system 22 can be set and saved by the UI 44. The setting screen can be displayed on a UI of a computer accessible to the server 40, such as the UI 94 of the control device 30 of the automatic analyzer 1, and the anomaly detection conditions can also be set from the UI 94. The setting screen of Fig. 12 is an example, and it is also possible to set condition items other than the items exemplified in the drawing. In addition, the setting screen illustrated in Fig. 12 can be shared by all the automatic analyzers connected to the server 40, or can be prepared for each ID of the automatic analyzer.

-Detection target / detection mode

In the setting screen illustrated in Fig. 12, the parts of the anomaly detection target of the liquid transport system 22 can be set in the area displayed as "anomaly detection target." As the parts of the anomaly detection target, one or more of three items of "passage," "electromagnetic valve," and "syringe" can be selected. The "passage" corresponds to the passages F1 to F6, the "electromagnetic valve" corresponds to the valves V1 and V2, and the "syringe" corresponds to the syringe SY.

In addition, in the setting screen of the drawing, a method of anomaly detection can be set in the area displayed as "detection mode." As the method of anomaly detection, one or more of two items of "detect anomaly mode" and "detect anomaly portion" can be selected. The "detect anomaly mode" is a method of detecting what kind of anomaly the detected anomaly is, and the "detect anomaly portion" is a method of detecting which part of the liquid transport system 22 is abnormal. The "anomaly mode" refers to the mode of the anomaly (what kind of anomaly it is), and in the case of, for example, the valves V1 and V2, it refers to an opening operation failure, a closing operation failure, and the like.

As described above by using Fig. 4, in the automatic analyzer 1, the data of the sensor outputs at plural timings (subjecting electrode to conditioning/measurement/cleansing) can be acquired during the measurement cycle of the same sample. Depending on which timing among these plural timings an alarm is given to the data, it is possible to estimate the parts for which anomaly is observed or the anomaly mode.

As an example, in the case where an alarm is given to the measurement at the time of subjecting electrode to conditioning in the measurement cycle corresponding to one cycle, it is suspected that the measurement has been performed without opening the valve V1 and without replacing the liquid inside of the flow cell FC with the auxiliary reagent (while being filled with the cleansing liquid). Also in the case where an alarm is given to the measurement at the time of concentration measurement, it is suspected that the measurement has been performed without opening the valve V1 and without introducing the reaction liquid into the flow cell FC. In these cases, anomaly is observed in the valve V1, and as the anomaly mode, an opening operation failure of the valve V1 is suspected. In the case where an alarm is given to the measurement at the time of cleansing, there is a possibility that the syringe SY has been operated without opening the valve V2 and with the auxiliary reagent and the reaction liquid enclosed between the valves V1 and V2, and as a result of an increase in the pressure between the valves V1 and V2, the liquid flowed back when the valve V1 has been opened and the cleansing liquid has not been absorbed. In this case, anomaly is observed in the valve V2, and as the anomaly mode, a closing operation failure of the valve V2 is suspected. In the case where a liquid leakage occurs in the passages F1 to F6 and in the case where the operation of the syringe SY is defective, the replacement operation of the liquid inside the flow cell FC is not normally performed, and the sensor output may be affected.

Regarding the relationship between the kind of anomaly of the constitutional parts of the liquid transport system 22 and the kind of effect on the data acquired at each timing, a pattern can be specified by experiment, simulation, or the like, and stored in, for example, the storage device 41. Accordingly, in Step S17 of Fig. 11, for example, the anomaly parts of the liquid transport system 22 and the anomaly mode thereof can be determined by the processing device 42 on the basis of the data of the sensor output obtained at least any of the plural timings.

-Detection sensitivity

In addition, in the setting screen of the drawing, the sensitivity of anomaly detection can be set in the area displayed as "anomaly sensitivity setting." As the sensitivity of anomaly detection, one of three levels of "high," "normal," and "low" can be selectively set.

Regarding the setting of the anomaly detection conditions, for example, for the detection sensitivity, the processing device 42 adjusts the sensitivity of anomaly detection by changing the set period during which the number of alarms is counted in Step S13 of Fig. 11. In this case, the longer the set period, the higher the detection sensitivity. For example, in the case where the set period of the detection sensitivity "high" is set to 48 hours, the set period of the detection sensitivity "normal" is set to 24 hours, and the set period of the detection sensitivity "low" is set to 12 hours, the processing device 42 selects the set period among 48 hours, 24 hours, and 12 hours according to the setting of the detection sensitivity.

In addition, the detection sensitivity can also be adjusted depending on the type of alarm related to the sensor output to be subjected to statistics. As described above with reference to Fig. 6 to Fig. 9, in the automatic analyzer 1, plural kinds of electrical signals such as the amount of emitted light, the current value, the voltage value, and the resistance value, are output from the sensor 21 at the same measurement opportunity, and alarm data is given in the case where a predetermined determination is made on the basis of these values and anomaly is observed. Specifically, as exemplified above, an alarm is recorded in the case where the measured value is higher than the proper value, in the case where the measured value is lower than the proper value, in the case where the EV value of the current generated in the electrode is higher than the proper value, and in the case where the EV value of the amount of light emitted from the reaction product is lower than the proper value. For example, in Step S12 of Fig. 11, the inspection sensitivity changes depending on which data is extracted as diagnostic data and which alarm has been given to the data from among these plural kinds of alarms. For example, a configuration is conceivable in which all the four types of alarms are set to the detection sensitivity "high," predetermined two or three types of alarms are set to the detection sensitivity "normal," and predetermined one or two types of alarms are set to the detection sensitivity "low," and the detection sensitivity is adjusted by selecting an alarm according to the setting of the detection sensitivity by the processing device 42. A configuration can be employed in which the set period is combined with the type of alarm, and the detection sensitivity is adjusted by selecting the alarm and the set period according to the setting of the detection sensitivity by the processing device 42.

In addition to the above, the diagnostic data can be extracted from the measurement of at least one type of sample among the specimen, the calibration sample, the QC sample, and the dummy sample, but it is conceivable to perform sensitivity adjustment by selecting the type of sample related to the diagnostic data.

-Effect-

(1) According to the present embodiment, it is possible to detect the anomaly of the parts of the liquid transport system 22 that absorbs and discharges the liquid with respect to the sensor 21, on the basis of the electric signals outputted from the sensor 21 for sample inspection of the automatic analyzer 1. Accordingly, the occurrence of downtime of the automatic analyzer 1 caused by a failure of the liquid transport system 22 or the like can be preventively suppressed. Since the anomaly of the parts of the liquid transport system 22 is detected on the basis of the output of the sensor 21 for sample inspection, it is greatly advantageous that a hardware part such as a new sensor need not be added. Since no new hardware part is required, applying to an existing automatic analyzer is easy.

(2) It is also possible to simply compare the sensor output with the set value and determine that there is anomaly in the parts of the liquid transport system 22 at the time when the measurement in which the anomaly of the parts of the liquid transport system 22 is suspected by comparison with the set value is performed, or at the time when the measurement in which anomaly is suspected is performed a predetermined number of times. However, since there is an error in the sensor output, if it is determined that there is anomaly in the parts of the liquid transport system 22 simply by acquiring the sensor output in which the anomaly of the parts is suspected, a predetermined number of times, there is a possibility that the anomaly is erroneously detected even though the parts of the liquid transport system 22 are normal.

In this case, the automatic analyzer 1 must be unnecessarily stopped in order to check the liquid transport system 22. In contrast to this, in the present embodiment, since the parts of the liquid transport system 22 are diagnosed on the basis of the statistics of the sensor outputs extracted as diagnostic data, it is possible to suppress the occurrence of erroneous detection of the anomaly and suppress the occurrence of opportunity to unnecessarily stop the automatic analyzer 1.

(3) In addition, the fluctuations (CV value in this example) of the data of the sensor outputs extracted from the set period are computed as the statistic value, and in the case where the statistic value is equal to or larger than the set value, it is determined that there is anomaly in the parts of the liquid transport system 22, so that early detection of the anomaly of the parts of the liquid transport system 22 is also expected. For example, if the valve V1 starts to malfunction and the valve V1 is not opened in the measurement to be performed in the open state of the valve V1, the diagnostic data largely fluctuates. In the present embodiment, the anomaly of the parts of the liquid transport system 22 can be detected at the initial stage by diagnosing the parts by using the fluctuations of the diagnostic data as an index as described above.

(4) By extracting the diagnostic data from the set period whose final segment is at present, the anomaly of the liquid transport system 22 can be reasonably detected at suitable time.

(5) Since the sensitivity of anomaly detection can be set with the UI 44 or 94, the automatic analyzer 1 can be flexibly operated such that the inspection sensitivity is set to be high when the measurement accuracy of the specimen is regarded as important, the inspection sensitivity is set to be low when decreasing in the checking frequency is regarded as important, and the like. In addition, since the anomaly detection target and the detection mode can also be set, the anomaly or anomaly mode can be detected by targeting a specific part whose state is particularly concerned, or the durability of each part can be investigated to optimize the interval between periodic checks.

(6) As a result of intensive studies, the inventors et al. of the present application have found that there is a certain correlation between an alarm generated at the time of measurement by the function of the automatic analyzer 1 and the state of the parts of the liquid transport system 22, which correlation can be utilized for detecting the anomaly of the parts. As in the present embodiment, the anomaly of the parts of the liquid transport system 22 can be rationally detected by detecting the anomaly of the parts by using the sensor output at the time of measurement with an alarm given.

(7) In particular, in the present embodiment, only the output of the sensor 21 at the time of sample measurement with an alarm given is used for diagnostic data, so that the risk of erroneous detection of anomaly can be reduced. For example, if a sensor output indicating a normal value is mixed in the diagnostic data, when an alarm is occasionally generated due to a factor other than the anomaly of the liquid transport system 22, there is a possibility that the data largely fluctuates regardless of the state of the liquid transport system 22, and the anomaly is erroneously detected. In contrast to this, by extracting only the sensor output with an alarm given as diagnostic data, the risk of erroneous detection of the anomaly of the parts of the liquid transport system 22 can be reduced, and the reliability of anomaly detection of the parts of the liquid transport system 22 can be enhanced while suppressing an occurrence of unnecessary stop of the automatic analyzer 1.

(8) By allowing the outputs of the sensor 21 not only at the time of measurement of the sample (at the time of measurement of the concentration of the component to be analyzed) but also at the time of cleansing the sensor 21 and conditioning the electrode to be included in the diagnostic data, it is possible to increase the accuracy of anomaly detection by securing an opportunity to acquire data. In addition, as described above, depending on the timing at which the alarm is given, it is possible to determine the part having the anomaly and the anomaly mode.

(9) By utilizing the data at the time of measurement of not only the specimen of the patient but also samples such as the calibration sample, the QC sample, and the dummy sample, it is possible to increase the accuracy of anomaly detection by securing an opportunity to acquire data. The QC sample, the calibration sample, and the dummy sample are all measured under the conditions similar or close to those for the specimen of the patient. Thus, by utilizing the data of these samples, it is possible to accurately diagnose the parts of the liquid transport system 22.

[Second Embodiment]

The difference between the present embodiment and the first embodiment is that the automatic analyzer 1 is provided with the anomaly detection system for the parts of the liquid transport system 22. The processes indicated by a parts anomaly detection function section F in the drawing are a series of processes related to the functions performed by the server 40 (Fig. 10) in the first embodiment. Regarding the parts anomaly detection function section, the data and processes assigned to the storage device 41 and the processing device 42 in the first embodiment are assigned to, for example, the storage device 31 and the processing device 32 of the control device 30 in the present embodiment. The diagnostic algorithm for detecting the anomaly of the parts of the liquid transport system 22 is similar to that in the first embodiment, and the result of detection is notified to the user or the like through the UI 94.

In the present embodiment, the other points are similar to those of the first embodiment, and the effect similar to that in the first embodiment can be obtained.

[Modified Example]

In the above description, an example of selectively extracting the data with an alarm given as diagnostic data and detecting the anomaly of the parts of the liquid transport system 22 on the basis of the extracted data has been described. However, in order to obtain the basic effect (1) described in the first embodiment, it is not necessary to use the giving of an alarm as a condition for diagnostic data. For example, it is also possible to apply an algorithm for extracting, regardless of the presence or absence of an alarm, the sensor output in the set period under predetermined conditions or randomly or uniformly, and detecting the anomaly of the parts of the liquid transport system 22 on the basis of the extracted data.

In addition, although an example of detecting the anomaly of the parts of the liquid transport system 22 on the basis of the statistic value of the diagnostic data of the number of settings has been described, an algorithm for detecting the anomaly of the parts of the liquid transport system 22 by simply comparing the sensor output with the corresponding set value without obtaining the statistic value can be applied as described above.

In addition, the set period for extracting the diagnostic data need not be the period whose final segment is at present. If there is a period to be particularly focused, it is conceivable that a predetermined period up to a certain point in time in the past is specified as the set period and anomaly detection can be executed on the basis of the log data of the sensor output.

In addition, the functions of setting the anomaly detection target, the detection mode, and the detection sensitivity are not necessarily required in order to obtain the basic effect (1), and unnecessary functions can be appropriately omitted.

In addition, an example of extracting the diagnostic data including all data obtained at plural timings during the measurement cycle in the target has been described, but this setting can also be appropriately changed. For example, a configuration may be employed in which the diagnostic data is extracted from only data related to any one or two among the time of sample measurement, the time of cleansing the sensor 21, and the time of subjecting the electrode to conditioning.

In addition, an example of extracting data of a sample measurement opportunity as diagnostic data without distinguishing the specimen of the patient, the calibration sample, the QC sample, and the dummy sample from each other has been described, but this setting can also be appropriately changed. For example, a configuration may be employed in which data of designated one, two, or three kinds of sample measurement opportunities among the specimen of the patient, the calibration sample, the QC sample, and the dummy sample is extracted as diagnostic data.

Reference Signs List

1: Automatic analyzer
2: Rack Transport Line
3: Incubator Disk
4: First Transport Mechanism
5: Retaining Member
6: SampleDispensing Nozzle
7: Reagent Disk
7a: Disk Cover
7b: Opening Portion
8: Reagent Dispensing Nozzle
9: Second Transport Mechanism
11: Control Unit
12: Manipulation Device
20: Detection Unit
21: Sensor
22: Liquid Transport System
23: Turntable
25: Potentiostat
28: A/D Converter
30: Control Device
31: Storage Device
32: Processing Device
33: Communication Interface
40: Server

41: Storage Device
42: Processing Device
43: Communication Interface
44: User Interface
91: Mechanical Section
92: Sample Data Reading Device
93: Reagent Data Reading Device
94: User Interface
C1: Sample Vessel
C2: Reaction Vessel
C3: Reagent Vessel
CL: Cleanser Vessel
D: Disposal Position
E1: Reference Electrode
E2: Counter Electrode
E3: Action Electrode
F: Parts Anomaly Detection Function Section
F1 to F6: Passage
FC: Flow Cell
M: Stirring Mechanism
NW: Network
P: Tip Mount Position
P1: Raw Data Recording Process
P2: Measured Data Converting Process
P3: Measured Data Recording Process
P4: Motion Log Recording Process
P5: Reagent Data Recording Process
P6: Sample Data Recording Process
P7: Alarm Data Recording Process
P8: Log File Generating Process
P21: Log File Storing Process
P22: Determination Data Extracting Process
P23: Determination Data Storing Process
P24: Data Counting Process
P25: Parts Diagnosing Process
PT: Photomultiplier Tube
R: Rack
RG: Auxiliary Reagent Vessel
RP: Reaction Product
SM: Reaction Vessel Installing Position
SP: Stand-by Position
SY: Syringe
T: Sample Dispensing Tip
V1, V2: Valve

**Claims**

1. A parts anomaly detection system to detect anomaly of parts of a liquid transport system (22) which absorbs and discharges liquid with respect to a sensor (21) for sample inspection of an automatic analyzer (1), wherein the system comprises: storage devices (31, 41) to store data of electric signals outputted by the sensor and processing devices (32,42) to process the data recorded in the storage devices, wherein the processing devices detect the anomaly of the parts of the liquid transport system based on the electric signals.

2. The parts anomaly detection system according to claim 1, wherein the processing devices compute a statistic value of the data of the electric signals and detect the anomaly of the parts of the liquid transport system based on the statistic value.

3. The parts anomaly detection system according to claim 2, wherein the processing devices read from the storage devices the data of the electric signals extracted over a set period; compute fluctuations of the data over the set period as the statistic value; and determine that there is anomaly of the parts of the liquid transport system when the statistic value is higher than a set value.

4. The parts anomaly detection system according to claim 3, wherein the set period is a period whose final segment is at present.

5. The parts anomaly detection system according to claim 3, wherein the processing devices adjust sensitivity of anomaly detection by altering the set value.

6. The parts anomaly detection system according to claim 2, wherein the statistic value is a value statistically derived from the electric signals outputted by the sensor at the time of measurement when an alarm has been issued.

7. The parts anomaly detection system according to claim 6, wherein the processing devices adjust the sensitivity of anomaly detection by selecting a type of the alarm related with the electric signals subjected to statistics.

8. The parts anomaly detection system according to claim 2, wherein the statistic value is a value statistically derived only from the electric signals outputted by the sensor at the time of measuring a sample when an alarm has been issued.

9. The parts anomaly detection system according to claim 1, wherein the processing devices identify one of an anomaly part and an anomaly mode indicating an anomaly status of the liquid transport system based on at least one electric signal among the electric signals outputted by the sensor with plural timings during measuring cycle of the same sample.

10. The parts anomaly detection system according to claim 9, wherein the plural timings comprise when the sample is inspected, when the sensor is cleansed and when an electrode is subjected to conditioning.

11. The parts anomaly detection system according to claim 1, wherein the sensor comprises: a flow cell (FC); a reference electrode (E1), a counter electrode (E2) and an action electrode (E3) with which the flow cell is provided; and a photomultiplier tube.(PT) disposed opposite to the reference electrode with an intervention of the flow cell therebetween.

12. The parts anomaly detection system according to claim 11, wherein the electric signal is one of a current value, a voltage value and a resistance value arising between the counter electrode and the action electrode when voltage is applied between the reference electrode and the action electrode.

13. The parts anomaly detection system according to claim 1, wherein the electric signal is a signal outputted by the sensor when the sample is inspected, when the sensor is cleansed or when the electrode is subjected to conditioning.

14. The parts anomaly detection system according to claim 1, wherein the sample is one of a specimen, a sample for calibration, a precision control sample and a dummy sample.

15. The parts anomaly detection system according to claim 1, wherein the liquid transport system comprises: passages (F1 to F6) through which the liquid flows; plural valves (VI, V2) to open and/or close the passages; and a syringe (SY) to cause pressure difference to suction and discharge the liquid to arise within the passages.

16. The parts anomaly detection system according to claim 15, wherein the parts correspond to the valves.

17. The parts anomaly detection system according to claim 1 further comprising user interfaces (44, 94) arranged such that anomaly detection conditions are settable.

18. An automatic analyzer (1) provided with a sensor (21) for measuring a specimen; a liquid transport system (22) to absorb and discharge liquid with respect to the sensor; and a parts anomaly detection system to detect anomaly of parts of the liquid transport system, wherein the parts anomaly detection system comprises storage devices (31, 41) to store data of electric signals outputted by the sensor and processing devices (32, 42) to process the data recorded in the storage devices, wherein the processing devices detect the anomaly of the parts of the liquid transport system based on the electric signals.

**19.** A parts anomaly detection method to detect anomaly of parts of a liquid transport system (22) which absorbs and discharges liquid with respect to a sensor (21) for measuring a specimen of an automatic analyzer (1), wherein the method comprises the steps of recording data of electric signals outputted by the sensor and detecting the anomaly of the parts of the liquid transport system based on the electric signals.

# FIG. 1

# FIG. 2

# FIG. 3

# FIG. 4

# FIG. 5

1

| 21 | 91 | 94 |
|---|---|---|
| SENSOR | MECHANICAL SECTION | UI |

30

MEASURED DATA
CONVERTING
PROCESS — P2

P3

MEASURED
DATA
RECORDING
PROCESS

P4

MOTION
LOG
RECORDING
PROCESS

P5

REAGENT
DATA
RECORDING
PROCESS

P6

SAMPLE
DATA
RECORDING
PROCESS

P7

ALARM DATA
RECORDING
PROCESS

LOG FILE
GENERATING PROCESS

P8

CONTROL DEVICE

AUTOMATIC ANALYZER

COMMUNICATION
I/F

NW

SERVER

33

40

## FIG. 6

## FIG. 7

## FIG. 8

## FIG. 9

# FIG. 10

# FIG. 11

```
                    ┌──────────┐
                    │  START   │
                    └──────────┘
                          │
                          ▼
          ┌───────────────────────────────┐
          │    ACQUIRE MEASURED DATA       │
          │      AND SENSOR DATA           │
          └───────────────────────────────┘
                          │
                          ▼
                    ╱─────────────╲          S11
                  ╱   PRESENCE OF   ╲    NO
                 ◄  ALARM FOR MEASUREMENT ►─────►
                  ╲     RESULT      ╱
                    ╲─────────────╱
                          │ YES
                          ▼                   S12
          ┌───────────────────────────────┐
          │     EXTRACT SENSOR DATA        │
          └───────────────────────────────┘
                          │
                          ▼
                    ╱─────────────╲          S13
                  ╱   NUMBER OF     ╲
           NO   ╱  ALARMS OVER LATEST ╲
          ◄────◄ SET PERIOD HIGHER THAN ►
                 ╲    SET NUMBER     ╱
                    ╲─────────────╱
                          │ YES
                          ▼                   S14
          ┌───────────────────────────────┐
          │ STATISTICALLY PROCESS ENTIRE   │
          │  DATA OVER LATEST SET PERIOD   │
          └───────────────────────────────┘
                          │                   S15
                          ▼
          ┌───────────────────────────────┐
          │      COMPUTE CV VALUE          │
          └───────────────────────────────┘
                          │
                          ▼
                    ╱─────────────╲          S16
                  ╱   CV VALUE      ╲    NO
                 ◄  HIGHER THAN SET   ►─────►
                  ╲     VALUE        ╱
                    ╲─────────────╱
                          │ YES            S17
                          ▼
          ┌───────────────────────────────┐
          │    DETERMINE MALFUNCTION       │
          └───────────────────────────────┘
                          │
                          ▼
                    ┌──────────┐
                    │   END    │
                    └──────────┘
```

# FIG. 12

44,94

**DETECTION CONDITIONS**

ANOMALY DETECTION TARGET     DETECTION MODE

- ● PASSAGE
- ● ELECTROMAGNETIC VALVE
- ○ SYRINGE

- ● DETECT ANOMALY MODE
- ● DETECT ANOMALY PORTION

ANOMALY SENSITIVITY SETTING

- ● HIGH
- ○ NORMAL
- ○ LOW

CANCEL          SAVE

# FIG. 13

## INTERNATIONAL SEARCH REPORT

| International application No. |
|---|
| **PCT/JP2022/046035** |

**A. CLASSIFICATION OF SUBJECT MATTER**

*G01N 35/00*(2006.01)i; *G01N 35/08*(2006.01)i
FI:  G01N35/00 F; G01N35/08 A

According to International Patent Classification (IPC) or to both national classification and IPC

**B. FIELDS SEARCHED**

Minimum documentation searched (classification system followed by classification symbols)

G01N35/00; G01N35/08

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2011-047911 A (SYSMEX CORP) 10 March 2011 (2011-03-10) | 1-19 |
| A | JP 2019-504315 A (GEN-PROBE INCORPORATED) 14 February 2019 (2019-02-14) | 1-19 |
| A | WO 2020/066449 A1 (HITACHI HIGH-TECHNOLOGIES CORPORATION) 02 April 2020 (2020-04-02) | 1-19 |
| A | JP 09-127126 A (HITACHI LTD) 16 May 1997 (1997-05-16) | 1-19 |

☐ Further documents are listed in the continuation of Box C.          ☑ See patent family annex.

| | | |
|---|---|---|
| * | Special categories of cited documents: | |
| "A" | document defining the general state of the art which is not considered to be of particular relevance | "T" later document published after the international filing date or priority date and not in conflict with the application but cited to understand the principle or theory underlying the invention |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **24 January 2023** | **07 February 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

<table>
<tr><td colspan="2" align="center">**INTERNATIONAL SEARCH REPORT**<br>**Information on patent family members**</td><td colspan="2">International application No.<br>**PCT/JP2022/046035**</td></tr>
</table>

| Patent document cited in search report | Publication date (day/month/year) | Patent family member(s) | Publication date (day/month/year) |
|---|---|---|---|
| JP 2011-047911 A | 10 March 2011 | US 2011/0054807 A1<br>EP 2293081 A2<br>CN 102004157 A | |
| JP 2019-504315 A | 14 February 2019 | US 2017/0191933 A1<br>WO 2017/117011 A1<br>CN 108369180 A | |
| WO 2020/066449 A1 | 02 April 2020 | US 2022/0034929 A1<br>EP 3859343 A1<br>CN 112867924 A | |
| JP 09-127126 A | 16 May 1997 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019536049 A